# EUROPEAN PATENT APPLICATION

(11) **EP 4 424 397 A1**
(43) Date of publication of application: **04.09.2024**
(21) Application number: 23211454.6
(22) Date of filing: 22.11.2023
(51) Int. Cl.: B01B 1/00

(54) **SYSTEM FOR RECOVERING VALUABLE MATERIAL FROM CRUCIBLE USED IN PRODUCTION OF POSITIVE ELECTRODE ACTIVE MATERIAL**

(30) Priority: 28.02.2023 KR 20230026708
(71) Applicant: ECOPRO MATERIALS CO., LTD., Pohang-si (KR)
(72) Inventor: KIM, DONG HEE, Pohang-si (KR); SHIN, DONG MIN, Pohang-si (KR); KANG, DONG HO, Daegu (KR)
(74) Representative: Appleyard Lees IP LLP

(57) **Abstract**

The present disclosure relates to a system for recovering valuable materials from a crucible used in the production of a positive electrode active material. The system includes: a crucible input unit (100) provided such that used positive electrode firing crucibles containing positive electrode material residue and lithium are placed thereon in a state in which openings of the crucible face downward, and are put into the system; a steam injection unit (200) defining a chamber and configured to sequentially move the crucibles put into the chamber and to inject high-pressure to inside and outside of the crucibles to separately collect slurry; a solid-liquid separation unit (300) configured to separate the slurry into solid and liquid, to discharge waste positive electrode material residue, and to separately collect a low-concentration lithium liquid phase; a lithium concentration unit (400) configured to recover a high-concentration lithium liquid phase concentrated to a target concentration through heating reaction of the low-concentration lithium liquid phase and to separately discharge steam; and a steam supply unit (500) configured to collect and reheat the discharged steam to a target temperature, and to supply high-pressure steam to the steam injection unit (200). As a result, an automated system that efficiently continuously recovers valuable metals by using and reusing high-pressure steam while eliminating the use of acidic solutions as in the prior art is provided.

## Description

### CROSS-REFERENCE TO RELATED APPLICATION(S)

This application is based on and claims priority to Korean Patent Application No. 10-2023-0026708, filed on February 28, 2023, in the Korean Intellectual Property Office, the disclosure of which is herein incorporated by reference in its entirety.

### BACKGROUND OF THE INVENTION

### 1. Field of the invention

The present disclosure relates to a system for recovering valuable materials from a crucible used in the production of a positive electrode active material. More specifically, the present disclosure relates to a series of automated systems for recovering valuable metals of a waste positive electrode material such as nickel and cobalt, and lithium from a firing crucible used in the production of a positive electrode, wherein valuable materials are efficiently and continuously recovered by using and reusing high-pressure steam while excluding the use of acidic solutions as in the prior art.

### 2. Description of the Prior Art

Generally, lithium ion batteries generate electricity depending on the electrical flow of lithium ions moving through an electrolyte between a positive electrode and a negative electrode. A battery cell, the smallest unit of a secondary battery, includes a positive electrode material, a negative electrode material, an electrolyte, and a separator in a container. As the positive electrode material of the secondary battery, a positive electrode active material such as nickel, cobalt, manganese, or aluminum is used, and as the negative electrode material, a negative electrode active material such as graphite or carbon is used. The electrolyte contains a lithium salt made of lithium, phosphoric acid, and fluorine, and an organic solvent.

High-nickel-based positive electrode materials such as nickel cobalt manganese (NCM) or nickel cobalt aluminum (NCA) is mainly used as a core material in medium-to-large batteries used in electric vehicles or energy storage systems. NCM and NCA are generally manufactured through a firing reaction by mixing lithium hydroxide or lithium carbonate with a high nickel-based precursor.

For example, Korean Patent No. 10-1069484 discloses a method of producing a positive electrode material for a lithium secondary battery including steps of: preparing an aqueous metal solution by mixing nickel and cobalt; mixing the aqueous metal solution, sodium hydroxide as a precipitant, and aqueous ammonia as a co-precipitation agent, putting a resultant mixture into a continuous reactor by using a metering pump, and stirring the mixture to obtain a precipitate; preparing a precursor by filtering, washing, and drying the precipitate; mixing lithium salt and aluminum in the precursor; and producing a positive electrode active material through firing and heat treatment in an oxygen atmosphere.

Meanwhile, with the recent increase in the use of secondary batteries, interest in technologies related to the recycling of valuable metals such as lithium, nickel, manganese, and cobalt is increasing, and technologies for recovering valuable metals from lithium ion batteries, which are discarded after use, have been mainly developed and known.

However, high-nickel-based positive electrode materials, which are used as a core material for medium-to-large batteries used in electric vehicles or energy storage systems, are produced through a high-temperature firing reaction in a crucible. Even though residues containing valuable metals of a positive electrode material such as nickel and cobalt and lithium are also generated on the surface of a crucible, most of the residues are discarded due to the lack of technology for recycling the residues.

### [Prior Art Documents]

### [Patent Documents]

(Patent Document 1) Korean Patent No. 10-1069484 (September 30, 2011)
(Patent Document 2) Korean Patent No. 10-2191858 (December 16, 2020)
(Patent Document 3) Korean Patent No. 10-1440241 (September 12, 2014)
(Patent Document 4) Korean Patent No. 10-0434548 (September 18, 2004)

### SUMMARY OF THE INVENTION

As described above, interest in technologies related to the recycling of valuable metals such as nickel, cobalt, and lithium is increasing due to the expansion of the electric vehicle market and the increased use of energy storage systems. Currently, most technologies are used to selectively recover valuable metals contained in lithium-ion batteries that are discarded after use through processes such as discharging and pulverizing.

However, high-nickel-based positive electrode materials, which are used as core materials in medium-to-large-sized batteries, are produced by mixing lithium hydroxide or lithium carbonate with a high-nickel-based precursor and performing a high-temperature firing reaction in a crucible. In the case of lithium hydroxide, Li-Al-O (LiAlO₂) is formed through a reaction with a crucible material during high-temperature firing, and during the repeated firing processes, the lithium hydroxide component penetrates into and diffuses from the surface of the crucible to the inside, creating a Li-Al-O structure inside.

In addition, since LiAlO₂, which is formed by the erosion reaction of a lithium compound on the surface of the crucible, causes cracks on the surface of the crucible, which reduces the recovery efficiency after producing a positive electrode material, periodic replacement of the crucible is necessary. Thus, despite the fact that used crucibles contain less than 1 wt% of lithium and positive electrode material residues, most of the used crucibles are discarded due to the lack of recycling technology.

In addition, heavy metals such as nickel and cobalt, which are major components of positive electrode materials partially contained in used crucibles, cause serious environmental problems if disposed without being treated as designated waste. Therefore, simple disposal is not desirable, not only because it increases the environmental load, but also from the perspective of stability of supply and demand for major mineral resources.

Meanwhile, a method of recovering valuable metals by powdering some of used crucibles through crushing and pulverizing processes and then performing a dissolution process of treating the powder with an acidic solvent. However, this method also has problems in that it is expected that about 99% of waste, excluding valuable materials, will be generated, and since the process of powdering the used crucible also requires a lot of energy costs and generates a large amount of dust, it is difficult to expect effectiveness in terms of recovery rate and efficiency.

Accordingly, the present disclosure was made to solve the problems of the prior arts described above and provides a system that includes: a crucible input unit 100 provided such that used positive electrode firing crucibles containing positive electrode material residue and lithium are placed thereon in a state in which openings of the crucible face downward, and are put into the system; a steam injection unit 200 defining a chamber and configured to sequentially move the crucibles put into the chamber and to inject high-pressure to inside and outside of the crucibles to separately collect slurry; a solid-liquid separation unit 300 configured to separate the slurry into solid and liquid, to discharge waste positive electrode material residue, and to separately collect a low-concentration lithium liquid phase; a lithium concentration unit 400 configured to recover a high-concentration lithium liquid phase concentrated to a target concentration through heating reaction of the low-concentration lithium liquid phase and to separately discharge steam; and a steam supply unit 500 configured to collect and reheat the discharged steam to a target temperature, and to supply high-pressure steam to the steam injection unit 200. As a result, it is possible to provide an automated system that continuously recovers valuable metals of a positive electrode material and lithium more efficiently by using and reusing high-pressure steam while excluding the use of acidic solutions as in the prior art.

The present disclosure provides a series of automated systems for recovering valuable metals of a waste positive electrode material such as nickel and cobalt, and lithium from a crucible used in a firing process for production of a positive electrode by using steam, wherein the valuable materials are efficiently and continuously recovered while excluding the use of acidic solutions as in the prior art.

In particular, the system of the present disclosure injects medium-pressure steam and high-pressure steam to the side surfaces and bottom surfaces of crucibles where nickel, cobalt, and the like are present to be spread and penetrated into the surfaces and porous structures, thereby achieving an effect of maximizing the recovery efficiencies of valuable material without fully crushing and pulverizing crucibles as in the prior art.

In addition, the present disclosure has an effect of significantly improving process and energy efficiency by collecting steam generated in the lithium concentration step and reusing the steam in the steam injection step.

According to the present disclosure, the moisture remaining in the crucibles after being subjected to the valuable metal recovery process using steam can significantly reduce the dust generated during the subsequent powder forming processes such as crushing and pulverization of the crucibles. Therefore, there is an advantage in that a secondary load reduction effect on environmental facilities can be achieved.

### BRIEF DESCRIPTION OF THE DRAWINGS

The above and other aspects, features and advantages of the present disclosure will be more apparent from the following detailed description taken in conjunction with the accompanying drawings, in which:

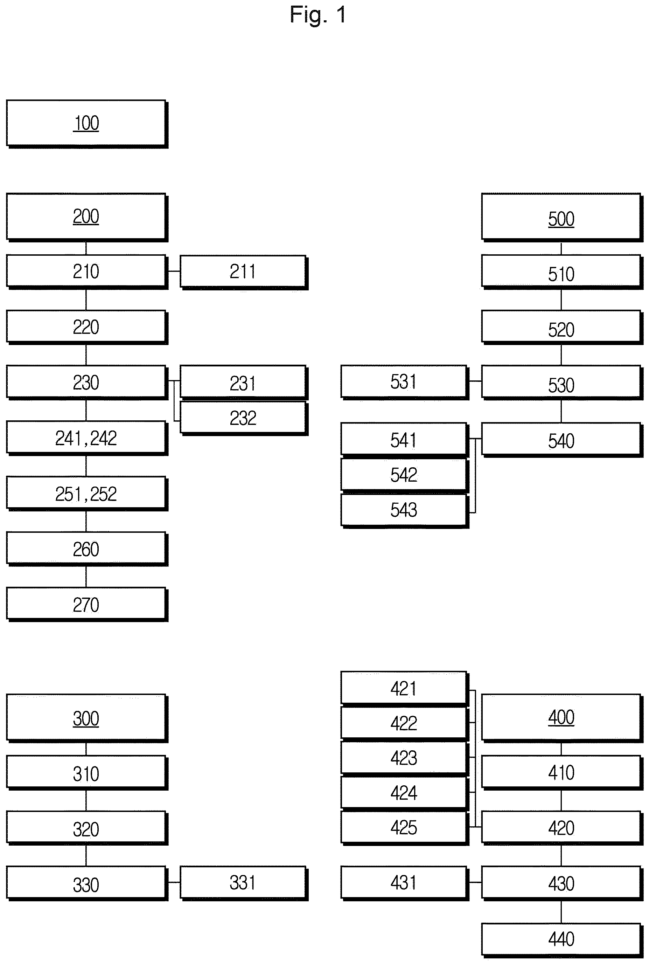

FIG. 1 is a schematic block diagram of a system for recovering valuable metals from a crucible used in the production of a positive electrode active material according to an embodiment of the present disclosure;

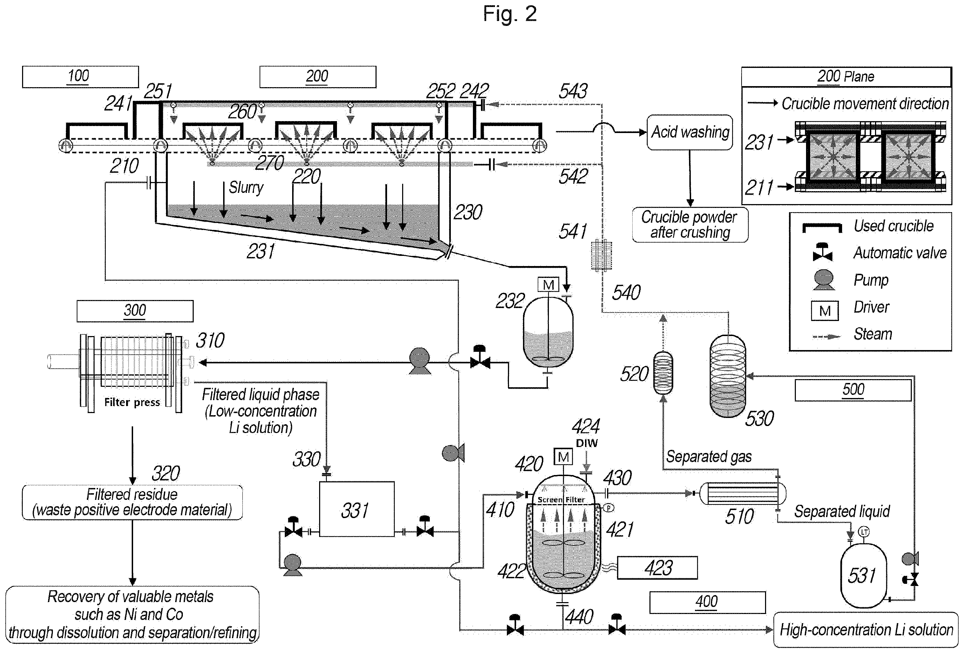

FIG. 2 is a schematic view of a system for recovering valuable metals from a crucible used in the production of a positive electrode active material according to an embodiment of the present disclosure;

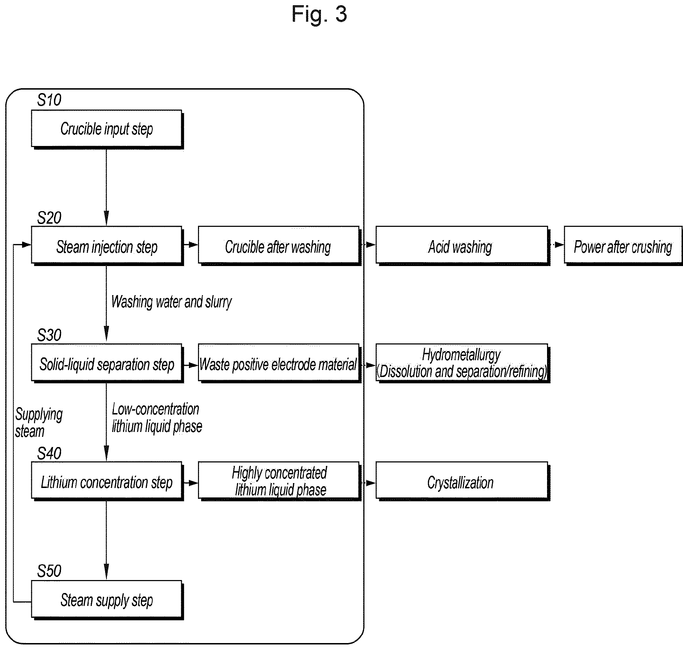

FIG. 3 is a schematic flowchart of a lithium recovery method by a system for recovering valuable metals from a crucible used in the production of a positive electrode active material according to an embodiment of the present disclosure;

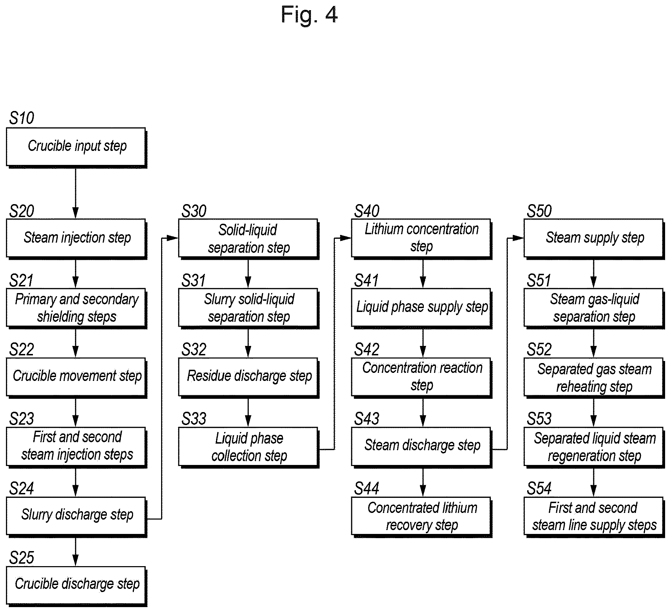

FIG. 4 is a schematic flowchart of a valuable metal recovery method by a system for recovering valuable metals from a crucible used in the production of a positive electrode active material according to an embodiment of the present disclosure;
FIG. 5 is a view illustrating images of resultant objects obtained by executing steps from a crucible input step to a solid-liquid separation step according to an embodiment of the present disclosure;
FIG. 6 is a graph showing the weights of valuable metals recovered from a crucible;
FIG. 7 is a view illustrating X-ray diffraction (XRD) graphs before and after a steam injection step according to an embodiment of the present disclosure;
FIG. 8 is a view illustrating comparative evaluation images of crucible washing after immersion in hot water.
FIG. 9 is a table 1 to show a positive electrode active material to be recovered;
FIG. 10 is a table 2 to show the main composition and impurities of each sample of embodiment 1;
FIG. 11 is a table 3 to show the used positive electrode firing crucibles utilized in the measurement of the above implementation data of embodiment 1;
FIG. 12 is a table 4 to show data analyzed obtained for main compositions and impurity components of embodiment 2;
FIG. 13 is a table 5 to show the component analysis data of embodiment 2;
FIG. 14 is a table 6 to show the data obtained through the analysis of embodiment 3;
FIG. 15 is a table 7 to show data of embodiment 4; and
FIG. 16 is a table 8 to show other data of embodiment 4.

### DETAILED DESCRIPTION OF THE EXEMPLARY EMBODIMENTS

Hereinafter, the configuration and operation of a system for recovering valuable metals from a crucible used in the production of a positive electrode active material according to an embodiment of the present disclosure will be described in detail with reference to the accompanying drawings.

The system for recovering valuable metals from a crucible used in the production of a positive electrode active material to which the technology of the present disclosure is applied relates to a series of automated systems that are capable of recovering valuable metals including nickel, cobalt, and lithium from the used crucible, wherein valuable metals can be more efficiently and continuously recovered through the using and reusing of high-pressure steam while excluding the use of acidic solutions in the prior art.

For this purpose, the system for recovering valuable metals from a crucible used in the production of a positive electrode active material according to the present disclosure generally includes a crucible input unit 100, a steam injection unit 200, a solid-liquid separation unit 300, a lithium concentration unit 400, and a steam supply unit 500, and a specific configuration of the system will be described below.

The crucible input unit 100 is provided such that a used positive electrode firing crucible containing positive electrode material residue and lithium is placed in a state in which the opening of the crucible faces downward and is put into the system.

The used crucible put into the crucible input unit 100 includes not only LiAlO₂ generated by the erosion reaction of a lithium compound, but also some residual positive electrode material after the firing reaction.

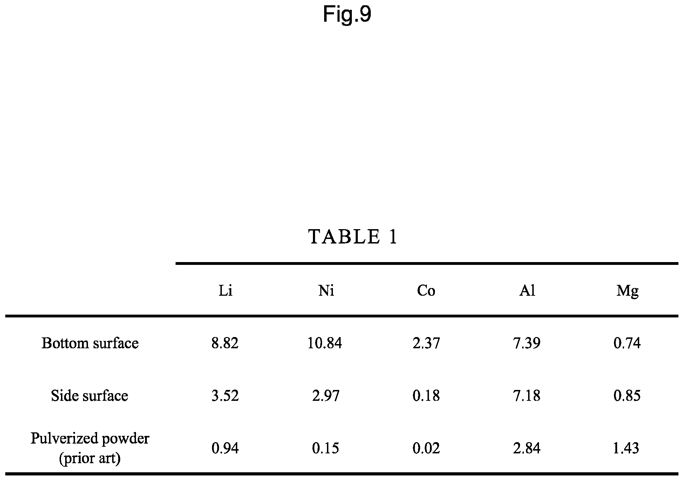

As shown in Table 1 of FIG.9 below, valuable metals to be recovered, such as nickel, cobalt, and lithium, are most abundant on the bottom surface of the crucible, which is the main reaction area, and are also present on the side surface (side wall) of the crucible due to LiAlO₂ formed through the erosion reaction.

However, far from the reaction surface, there are portions of the crucible where no erosion reaction has not occurred. Therefore, when the crucibles are fully crushed and pulverized as in the prior art, the concentration of valuable metals to be recovered, such as nickel, cobalt, and lithium, is reduced due to the mixing of Al-Si-Mg oxide, which is the main component of the crucible, thereby reducing recovery efficiency.

Therefore, when high-pressure steam is used for the effective area in a non-destructive manner that does not crush or pulverize the entire used crucible, selective separation and recovery is possible, thereby improving recovery efficiency.

The crucible input unit 100 of the present disclosure is configured to put the used crucible into the system in its original form without crushing or pulverizing the crucible so that the crucible is supplied to the steam injection unit 200, which will be described later.

The steam injection unit 200 includes a chamber and is configured to sequentially move the crucible put into the chamber and inject high-pressure steam to the inside and outside of the crucible to collect the slurry separately, wherein the steam injection unit 200 is configured to inject medium- and high-pressure steam to the side surface and bottom surface of the used crucible, which are the areas where valuable metals are most abundantly distributed, to recover valuable metals including nickel, cobalt, and lithium.

The steam injection unit 200 is configured to effectively collect slurry containing valuable metals by high-pressure steam injection and supply the slurry to a subsequent unit.

Therefore, the steam injection unit is configured to solve the problems of the system in the prior art in which, by recovering valuable metals through a leaching process using a solvent such as sulfuric acid (H₂SO₄) after crushing and pulverizing the crucible itself into powder, it is necessary to process, excluding about 1 wt% of valuable metals to be recovered, about 99% of the waste valuable metals, resulting in inefficiency and high energy costs.

The steam injection unit 200 includes a crucible movement module 210 and a first steam injection module 220 inside a sealed chamber space, wherein the crucible movement module 210 moves in one direction inside the chamber, and above the crucible movement module 210, spacing guides 211, which are seated on the outer periphery of the opening of the crucible, are arranged at regular intervals.

The crucible movement module 210 uses, for example, a chain conveyor, a roll type conveyor, or a belt type conveyor to seat the crucible with the opening facing downward, and is configured to move in the state of being seated on the outer periphery excluding the opening of the crucible such that high-pressure steam by the first steam injection module 220, which will be described later, can be applied to the inside of the opening of the crucible.

The moving speed of the crucible moving module 210 is set depending on a time period of steam injection for the crucible in the range of 10 minutes to 24 hours.

The spacing guides 211 provided in the crucible movement module 210 are arranged to move a plurality of crucibles put into the system to move at the same spacing as the arrangement spacing of the first steam injection modules 220, which will be described later, and a drop prevention member 270 is provided under the crucible movement module 210.

The drop prevention member 270 of the crucible movement module 210 is configured to prevent damaged things from falling to the first steam injection modules 220 and the slurry collection module 230, which will be described later, when an unexpected crack damage occurs in the used crucible due to the high-pressure steam by being provided in a mesh form under the crucible movement module 210.

The first steam injection modules 220 have nozzles arranged at regular intervals vertically below the crucible movement module 210 and are provided to inject high-pressure steam supplied from the steam supply unit 500 into the crucibles.

The first steam injection modules 220 are arranged at intervals corresponding to the positions of a plurality of crucibles that are moved at regular intervals with the openings facing downward by the crucible movement module 210 and are configured to inject high-pressure steam to respective crucibles. The first steam injection modules 220 are configured to receive steam by being connected to a first steam line 542 from a steam supply unit 500, which will be described in detail below.

The first steam injection modules 220, each of which is provided with a single-type nozzle or multiple-type nozzles, are arranged at regular intervals.

For example, as the distance between the nozzles of the first steam injection modules 220 and the crucibles increases, the contact temperature of the crucibles with steam decreases.

To correct this, when the steam pressure injected from the nozzles is set strong and continues at a level that causes the crucibles to shake, the surfaces of the crucibles may be severely chipped, which may lead to cracks, and when the raw materials of the crucibles are mixed into the slurry due to cracks, the recovery rate of valuable metals may decrease. Therefore, it is desirable to organically consider the distance between the nozzles and the surfaces of the crucibles, the weight of the crucibles, and the injection form and pressure of the steam nozzles.

A single-type nozzle is provided at a position corresponding to the deep portion of each crucible to inject high-pressure steam over an entire radial area, and multiple-type nozzles are provided at multiple positions corresponding to the shapes of a crucible to inject high-pressure steam to respective areas.

The single-type nozzle or the multiple-type nozzles are installed such that the injection direction of high-pressure steam can be fixed or rotated to minimize a non-cleaned area (dead zone) on the bottom surface and side surface of the crucible.

The temperature of the high-pressure steam injected to the crucibles by the first steam injection modules 220 is set to be in the range of 100 to 230°C.

The first steam injection modules 220 are configured to inject steam at a temperature in the above-mentioned range, preferably around 100 to 150°C, to maximize the power of washing the slurry containing valuable metals from the surfaces of the crucibles having a porous structure, thereby effectively securing the washing power while minimizing unnecessary heat consumption. Since the steam injected by the first steam injection modules 220 is greatly affected by temperature, primary shielding modules 241 and 242 and secondary shielding modules 251 and 252 are provided on both sides of the steam injection unit 200.

The primary shielding modules 241 and 242 and the secondary shielding modules 251 and 252 are installed in duplicate on the inlet and outlet sides of the chamber, respectively, and are provide , for example, in the form of an automatic shutter to shield the inside of the chamber at the time of input and discharge of the crucibles to minimize the influence of external temperature.

The steam injection unit 200 further includes second steam injection modules 260, wherein the second steam injection modules 260 have nozzles arranged at regular intervals above the crucible movement module 210 and are configured to inject high-pressure steam supplied from the steam supply unit 500 to the outside of the crucibles and the crucible movement module 210.

The second steam injection modules 260 are disposed above the crucibles moved by the crucible movement module 210 and are configured to inject high-pressure steam to the outers surfaces of the crucibles, the crucible movement module 210, and the drop prevention member 270.

The second steam injection modules 260 are provided to recover the waste positive electrode material remaining on the outside of the crucibles and to clean the gap between the crucible movement module 210 and the drop prevention member 270, thereby preventing the recovery rate and efficiency rate from being reduced due to adhesion of foreign substances or the like in the system.

In addition, the second steam injection modules 260 are configured to receive steam by being connected to a second steam line 543 from the steam supply unit 500, which will be described in detail below.

The steam injection unit 200 includes a slurry collection module 230 located below the crucible movement module 210.

The slurry collection module 230 is provided with a settling tank that forms a slope 231 in one direction under the first steam injection modules 220 to collect the slurry, which contains valuable metals and steam washing liquid falling from the crucibles, with a slurry stirring collection tank 232.

The slurry collection module 230 is configured to collect the slurry, which falls in the state of containing valuable materials, along with the steam injected by the first steam injection module 220 and the second steam injection module 260, with the slurry stirring tank 232 disposed at the lower end of the slope 231.

The slurry stirring tank 232 is equipped with, for example, one or more turbine-type or paddle-type impellers, and is configured to store the recovered steam washing liquid and slurry as a homogeneous slurry in a stirred state and to supply the slurry to the solid-liquid separation unit 300, which will be described later, by controlling a valve when the slurry reaches a predetermined level.

The crucibles from which valuable metals have been recovered while passing through the steam injection unit 200 can be discharged to the outside of the chamber and recovered in the form of powder through crushing and pulverizing processes. At this time, moisture can be evaporated quickly when the crucibles are moved to the outside due to steam heat, and some remaining moisture may have the secondary effect of reducing dust scattering during crushing and pulverizing operations.

The solid-liquid separation unit 300 is configured to perform solid-liquid separation, discharge waste positive electrode material residues containing some crucible components and lithium, and separately collect a low-concentration lithium liquid phase, and to introduce the slurry into the slurry collection module 230 by being connected to the slurry stirring tank 232 of the slurry collection module 230, wherein the solid-liquid separation unit 300 includes a filtration module 310, a residue discharge module 320, and a liquid collection module 330.

The filtration module 310 is configured to receive the slurry collected from the steam injection unit 200 and to filter the slurry by using a filter press, and wherein the filtration module 310 is configured to separate the slurry into solid waste positive electrode material residue and a low-concentration lithium liquid phase by being provided as the filter press.

The residue discharge module 320 is configured to separately discharge the filtered waste positive electrode material residue and use the same for the recovery of valuable metals. Since the filtered residue discharged through the residue discharge module 320 may contain metals such as Al and Mg in addition to Ni and Co, which are the main components of the waste positive electrode material, the filtered residue may be separated and purified through recovery methods such as solvent extraction or precipitation to enable additional recovery.

The liquid collection module 330 is configured to collect the filtered low-concentration lithium liquid phase in a filtered liquid phase tank 331 and to supply the lithium liquid phase to the lithium concentration unit 400 or to circulate the lithium liquid phase to the steam injection unit 200.

The low-concentration lithium solution discharged through the liquid collection module 330 is temporarily stored in the filtered liquid phase tank 331 and then supplied to the liquid supply module 410 of the lithium concentration unit 400, which will be described later. In addition, a portion of the liquid stored in the filtrated liquid phase tank 331 may be used to prevent the waste positive electrode materials from adhering to the inner wall and from forming scale sticking phenomenon and scale formation caused by waste anode materials or the like by being put into the slurry stirring tank 232 when necessary.

The lithium concentration unit 400 is configured to recover the high-concentration lithium liquid concentrated to the target concentration through heating and reaction of the low-concentration lithium liquid and to separately discharge steam. The lithium concentration unit 400 is configured such that the low-concentration lithium liquid phase stored in the filtration liquid tank 331 of the solid-liquid separation unit 300 is introduced into the lithium concentration unit 400 to be concentrated into the high-concentration lithium liquid phase, wherein the lithium concentration unit 400 includes a liquid supply module 410 and a concentration reaction module 420.

The liquid supply module 410 is configured to supply the low-concentration lithium liquid phase collected in the solid-liquid separation unit 300 to the upper portion of the concentration reaction module 420, which will be described later, wherein the concentration reaction module 420 is configured to concentrate the supplied low-concentration lithium liquid phase into the high-concentration lithium liquid phase through evacuation and heating.

The concentration reaction module 420 is configured to obtain a highly concentrated lithium liquid phase by evaporating and concentrating the low concentration lithium liquid phase through heating, and includes a reaction tank 421, a heat supply unit 423, and a washing injection unit 424.

The reaction tank 421 includes an insulation portion 422 jacketed outside the reaction tank and a stirrer installed inside the rection tank, wherein the reaction tank 421 is provided in the form of a jacketed reactor and is insulated from the outside to minimize the loss of heat supplied from the heat supply unit 423, which will be described later.

The reaction tank 421 is configured to reduce the pressure of the internal liquid phase with a vacuum pump and rotate the internal liquid phase with a stirrer. The stirrer may to be equipped with, for example, one or more turbine-type or paddle-type impellers.

The reaction tank 421 is equipped with a predetermined pressure gauge P, and when the internal pressure is excessively different from the external pressure, the pressure difference is relieved through a vent or the system is stopped to prevent safety accidents.

The heat supply unit 423 is provided to supply heat to the reaction tank 421 to heat the reaction tank 421.

The washing injection unit 424 is configured to selectively inject distilled water from the top of the reaction tank 421, wherein the washing injection unit 424 is provided with a plurality of nozzles that inject distilled water throughout the interior of the reaction tank 421, and wherein the washing injection unit 424 is configured to compensate for the amount of moisture absorbed or lost in the crucibles as needed and to clean salts or foreign substances attached to the inner wall of the reaction tank 421 or a steam screen 431, which will be described later.

The concentration reaction module 420 includes a recovery concentration measuring unit 425, wherein the recovery concentration measuring unit 425 is configured to measure the lithium concentration in the high-concentration lithium liquid phase and to discharge the high-concentration lithium liquid phase to a concentrated lithium recovery module 440 when the lithium concentration reaches 8 to 10 weight% or more.

The lithium concentration unit 400 basically performs a steam supply step by a steam supply unit 500, which will be described later, until the lithium concentration reaches the target value during the evaporation concentration process, wherein the recovery concentration measuring unit 425 has a sampling point in a lower portion of the reaction tank 421 to analyze the lithium concentration in the liquid phase and is configured to allow the concentrated lithium recovery module 440 to recover the high-concentration lithium liquid phase when the lithium concentration reaches a level equal to or higher than the target value.

The steam discharge module 430 is configured to screen the steam generated in the concentration reaction module 420 and discharge the steam to the steam supply unit 500, wherein the steam discharge module 430 is configured to discharge heated and generated under a reduced pressure in the reaction tank 421 to the steam supply unit 500, which will be described later.

The heated steam may have a temperature lower than 100°C, and in order to prevent the formation of salt or scale during the supply of steam to the steam supply unit 500, a steam screen 431 is mounted on the upper discharge path of the reaction tank 421 to discharge only pure steam.

The concentrated lithium recovery module 440 is configured to recover the high-concentration lithium liquid concentrated in the concentration reaction module 420, wherein the concentrated lithium recovery module 440 is configured to recover the high-concentration lithium liquid phase when it is determined that the high-concentration lithium liquid phase reaches the target concentration by the concentration measuring unit 425 and discharged from the reaction tank 421.

The lithium in the liquid recovered by the concentrated lithium recovery module 440 may exist in the form of an aqueous solution of lithium compounds containing lithium hydroxide (Li(OH)), lithium carbonate (Li₂CO₃), and the like remaining in the crucibles during the positive electrode firing process and may be concentrated in the range of 8 to 10 wt%.

The steam supply unit 500 is configured to collect discharged steam, to reheat the collected steam to a target temperature, and to supply the heated steam to the steam injection unit 200 as high-pressure steam, wherein the steam supply unit 500 is configured to recover the steam generated during the concentration process by the lithium concentration unit 400 through the steam discharge module 430 and re-supply the steam to the steam injection unit 200, and includes a gas-liquid separation module 510, a steam reheating module 520, a steam regeneration module 530, and a steam supply module 540.

The gas-liquid separation module 510 is configured to collect the steam generated in the lithium concentration unit 400 and to separate the collected steam into separated gas and separated liquid, wherein in order to prevent the formation of scale by the collected steam, the gas-liquid separation module 510 is configured to separate the collected steam into the separated gas and the separated liquid and to supply the separated gas and the separated liquid to a steam reheating module 520 and a steam regeneration module 530, respectively, which will be described later.

The steam reheating module 520 is connected to the gas-liquid separation module 510 and is configured to reheat the separated gas to a target pressure and temperature, wherein the steam reheating module 520 reheats the separated gas to the target pressure and temperature to form saturated steam or super-heated steam.

The steam that has passed through the steam reheating module 520 contains latent heat and is at a higher pressure than the steam discharged from the lithium concentration unit 400, thereby maximizing transportation efficiency with a small specific volume, wherein the steam reheating module 520 is configured to reheat the separated gas indirectly or directly by applying, for example, a boiler or a heat exchanger.

The steam regeneration module 530 is configured to receive the separated liquid from a separated liquid phase tank 531 connected to the gas-liquid separation module 510 and to generate steam at the target pressure and temperature, wherein the steam regeneration module 530 is configured to temporarily store the separated liquid in the separated liquid tank 531 and to control the supply of the stored liquid by a valve to regenerate steam.

The steam regenerated by the steam regeneration module 530 meets the steam that has passed through the steam reheating module 520 through a steam flow pipe (not denoted by a reference numeral) and is supplied to the steam supply module 540, which will be described later. The steam supply module 540 is configured to filter the steam formed in the steam reheating module 520 and the steam regeneration module 530 and supply the filtered steam to the steam injection unit 200.

The steam supply module 540 includes a steam filter 541, a first steam line 542, and a second steam line 543.

The steam filter 541 is installed on a steam flow line connected to the steam reheating module 520 and the steam regeneration module 530, and the steam filter 541 filters the steam formed by the steam reheating module 520 and the steam regeneration module 530 such that the steam can be reused as crucible washing steam in the steam injection unit 200.

The first steam line 542 is configured to supply steam to be injected into the openings of crucibles by being connected to the first steam injection module 220 of the steam injection unit 200 on the rear side of the steam filter 541.

The second steam line 543 is configured to supply steam to be injected to the external upper surfaces of crucibles by being connected to the second steam injection module 260 of the steam injection unit 200 on the rear side of the steam filter 541.

Hereinafter, a method for recovering valuable metals by a system for recovering valuable metals from crucibles used in the production of a positive electrode active material, to which the technique of the present configured as described above is applied, will be described.

The following description will be made by taking embodiments of the present disclosure as examples, and the present disclosure is not limited to the following examples.

A method for recovering valuable metals by using high-pressure steam from a crucible used for the production of a positive electrode active material according to the present disclosure generally includes a crucible input step (S10), a steam injection step (S20), a solid-liquid separation step (S30), a lithium concentration step (S40), and a steam supply step (S50).

In the crucible input step (S10), a plurality of used anode firing crucibles are put into a system at regular intervals in their original states in a state where openings thereof face downward.

In detail, the steam injection step (S20) includes primary and secondary shielding steps (S21), a crucible movement step (S22), first and second steam injection steps (S23), slurry discharge step (S24), and a crucible discharge step (S25).

In the primary and secondary shielding steps (S21), when the crucibles are put into the primary shielding modules 241 and 242 provided on the entrance side of the chamber, the primary shielding modules 241 and 242 are closed, the secondary shielding modules 251 and 252 installed inside are opened, and the crucibles are seated in the crucible movement module 210.

In the crucible movement step (S22), the crucibles put into the chamber are moved in one direction while maintaining a predetermined distance therebetween on the crucible movement module 210 by the spacing guides 211.

In the first and second steam injection steps (S23), the first steam injection modules 220 inject high-pressure steam radially or closely to each area inside the openings of respective crucibles from the bottom sides of the moving crucibles. At the same time, the second steam injection modules 260 inject high-pressure steam to the outer upper portions of the respective crucibles from the top sides of the crucibles to wash the crucible movement module 210 and the drop prevention member 270.

In the slurry discharge step (S24), washing water (steam) slurry containing valuable materials that fall to the slurry collection module 230 under the chamber through the first and second steam injection steps (S23) are discharged in one direction along the slope 231 and collected in the slurry stirring tank 232.

In the crucible discharge step (S25), the crucibles that have been subjected to the steam injection step (S20) are discharged to the outlet of the chamber. On the outlet side of the chamber, the crucibles that have been subjected to the steam injection step (S20) are sequentially discharged. When the crucibles are discharged outside the secondary shielding modules 251 and 252, the secondary shielding modules 251 and 252 are closed, and the primary shielding modules 241 and 242 placed outside are opened to discharge the crucibles.

The crucibles discharged in the crucible discharge step (S25) can be recovered in a powder form through later pickling, crushing, and pulverizing processes, and by being subjected to the first and second steam injection steps (S23), the secondary effect of reducing the scattering of dust during crushing and pulverizing operations can be obtained due to the moisture remaining in the crucibles.

In detail, the solid-liquid separation step (S30) includes a slurry-solid-liquid separation step (S31), a residue discharge step (S32), and a liquid phase collection step (S33).

In the slurry solid-liquid separation step (S31), the slurry collected and homogeneously stirred in the slurry stirring tank 232 is introduced into and filtered by the filtration module 310 and is separated into solid waste positive electrode material residue and low-concentration lithium liquid phase.

In the residue discharge step (S32), the residue discharge module 320 separately discharges the separated waste positive electrode material residue. The discharged waste positive electrode material can be used in hydrometallurgical processes such as melting and separation refining to recover additional valuable metals.

In the liquid collection step (S33), the liquid collection module 330 collects the separated low-concentration lithium liquid phase in the filtration liquid tank 331. The low-concentration lithium liquid phase collected in the filtration liquid tank 331 is supplied to the lithium concentration unit 400, or some of the low-concentration lithium liquid phase is circulated to the steam injection unit 200 and is used to prevent scale formation inside the slurry stirring tank 232.

The lithium concentration step (S40) includes, in detail, a liquid supply step (S41), a concentration reaction step (S42), a steam discharge step (S43), and a concentrated lithium recovery step (S44).

In the liquid supply step (S41), the liquid supply module 410 causes the low-concentration lithium liquid phase stored in the filtration liquid tank 331 to flow into the reaction tank 421 of the concentration reaction module 420.

In the concentration reaction step (S42), the concentration reaction module 420 heats the low-concentration lithium liquid phase supplied to the reaction tank 421 defining the jacketed insulation portion 422 by the heat supply unit 423 while stirring the low-concentration lithium liquid phase with the stirrer to evaporate and concentrate the low-concentration lithium liquid phase into a high-concentration lithium phase.

In the concentration reaction step (S42), if necessary, distilled water is injected throughout the reaction tank 421 by the washing injection unit 424 to compensate for the amount of moisture absorbed in the crucibles and to wash the inner wall of the reaction tank 421 and the steam screen 431.

In the steam discharge step (S43), the steam discharge module 430 screens the steam generated during the concentration reaction step (S42) through the steam screen 431 and discharges it to the steam supply unit 500.

In the concentrated lithium recovery step (S44), the lithium concentration is measured by the recovery concentration measuring unit 425 during the concentration reaction step (S42), and the high-concentration lithium liquid phase concentrated in the range of 8 to 10 wt% is recovered by the concentrated lithium recovery module 440.

The high-concentration lithium liquid recovered through the concentrated lithium recovery step (S44) is recovered later as lithium through a crystallization process.

The steam supply step (S50) includes, in detail, a steam gas-liquid separation step (S51), a separated gas steam reheating step (S52), a separated liquid steam regeneration step (S53), and first and second steam line supply steps (S54) .

In the steam-liquid separation step (S51), the gas-liquid separation module 510 collects the steam discharged in the steam discharge step (S43) and separates the steam into separated gas and separated liquid, and supplies the separated gas and the separated liquid to the steam reheating module 520 and the steam generation module, respectively.

In the separated gas steam reheating step (S52), the steam reheating module 520 reheats the separated gas to a target pressure and temperature to form saturated steam or superheated steam.

In the separated liquid steam regeneration step (S53), the steam regeneration module 530 temporarily stores the separated liquid in the separated liquid tank 531 and controls the supply of the stored liquid by a valve to regenerate steam at a target pressure and temperature.

In the first and second steam line supply steps (S54), the steam supply module 540 filters the steam formed in the separated gas steam reheating step (S52) and the separated liquid steam regeneration step (S53) through the steam filter 541 and supplies the steam to the first steam injection module 220 and the second steam injection module 260 through the first steam line 542 and the second steam line 543, respectively.

Hereinafter, examples in which the present disclosure was implemented as described above were prepared, and the effects thereof were carefully examined through experiments as described below.

### < Embodiment 1: Crucible Input Step>

In order to confirm the composition of used positive electrode firing crucibles, samples were collected by grinding the side and bottom portions of the crucibles by 5 mm.

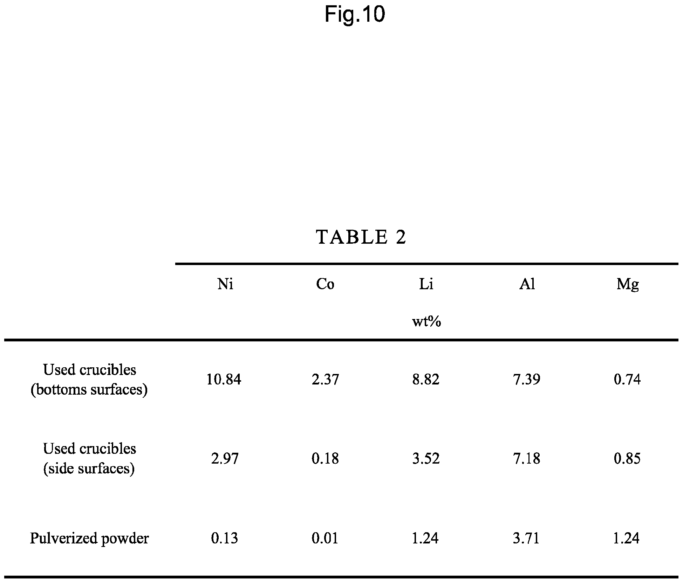

In order to confirm the main composition and impurities, 1g of each sample was dissolved in 10 ml of aqua regia, and data were measured by using high-frequency inductively coupled plasma (ICP-OES) equipment, as shown in Table 2 of FIG.10 below.

The used crucibles contained not only LiAlO₂ generated from the erosion reaction of a lithium compound, but also some residual positive electrode materials after firing reaction. As the distance from the surfaces of the crucibles increased, there were portions where no erosion reaction occurred. During crushing and pulverization, the lithium concentrations decreased to 0.5 to 1.5 wt%, and the waste positive electrode metals (Ni, Co, and the like) remaining on the surfaces also decreased so that Ni decreased to about 0.13wt% and Co decreased to about 0.01wt%.

In the prior art, there is a method of recovering valuable metals through a leaching process using a dissolving agent such as sulfuric acid after crushing a used crucible itself. However, it is necessary to treat 99% of waste containing Ni and Co, which are heavy metals harmful to the environment, and since impurities such as Al and Mg are dissolved together, the recovery efficiency is significantly low.

Therefore, the present disclosure provides a valuable metal recovery system using high-pressure steam that is different from the prior art.

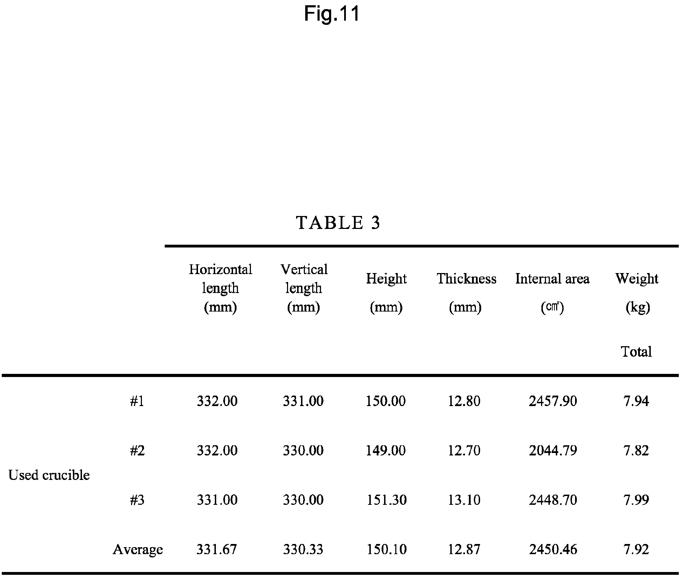

The used positive electrode firing crucibles utilized in the measurement of the above implementation data, had the specifications as shown in Table 3 of FIG.11 below. The average values of the used crucibles utilized in this example were confirmed by measuring each specification for the crucible that were discharged through about 21 firing cycles.

### <Embodiment 2: Steam Injection Step → Solid-Liquid Separation Step>

A steam injection step (S20) was performed to recover the remaining waste positive electrode material and lithium on the inner bottom surfaces and side surfaces of used crucibles, which had an actual weight of 7.99 kg.

The steam pressure was set to about 15 bar with steam generates rated 10 to 30 bars, and the steam temperatures measured on the surfaces of the crucibles was confirmed to be in the range of 100 to 150°C. Slurry containing waste positive electrode material was recovered by injecting steam at a rate of 40.8 cm²/min over the entire internal areas by using a single injection nozzle, and the temperatures of the recovered slurry were confirmed to be 45 to 50°C.

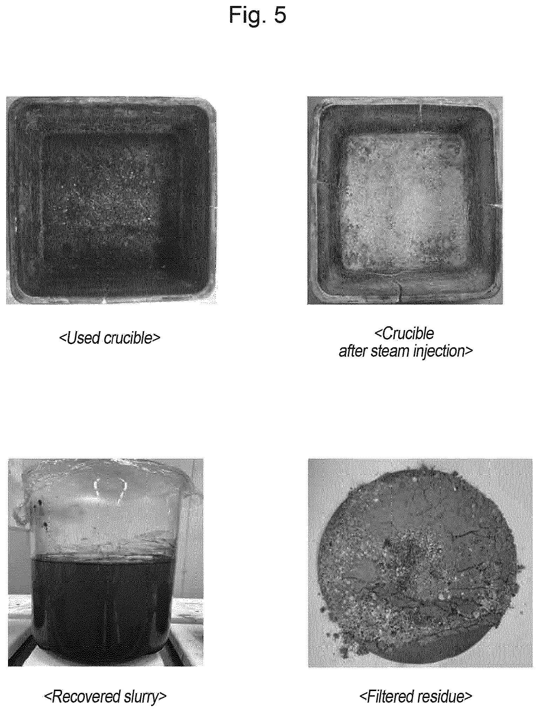

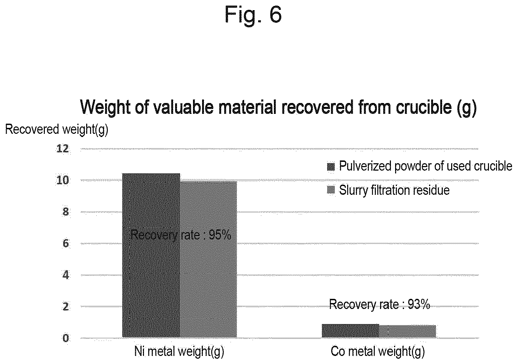

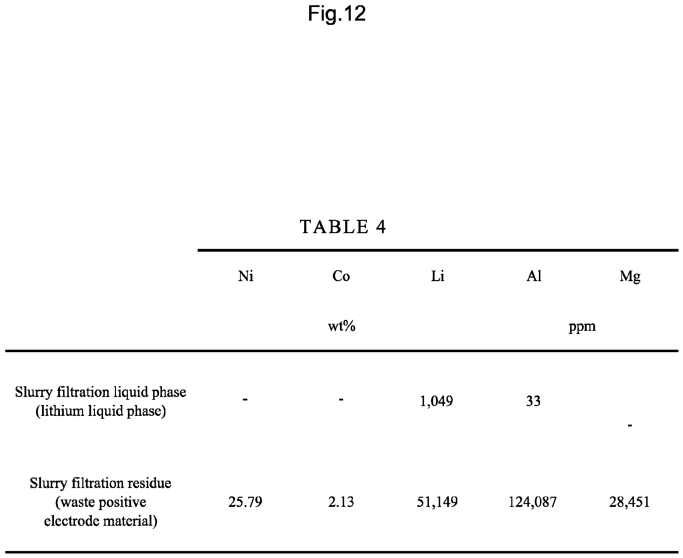

In the solid-liquid separation step (S30), 2.94 kg of filtrated liquid phase samples and 38.5 g of dried filtration residue samples were obtained through filtration under a reduced pressure, and data analyzed obtained for main compositions and impurity components by using ICP-OES equipment are shown in Table 4 of FIG.12 below. FIG. 5 illustrates the images of process results obtained by performing steps from the crucible input step to the solid-liquid separation step (S10 to S30), and FIG. 6 is a graph showing the weights of valuable metals recovered from a crucible.

In the filtered liquid phase, an aqueous solution containing ionized Li was obtained, in the slurry filtration residue, most of nickel and cobalt, which are the main components of the waste positive electrode material were recovered at 95% and 93% or more, respectively.

In addition, not only lithium but also aluminum and magnesium, which are main components of the crucible, were observed, and are presumed to have been partially separated from the used crucible in the steam injection step (S20).

In order to compare the washing effect by high-pressure steam according to the present disclosure and the washing effect by hot water immersion, a comparation was performed by preparing standard samples of 1.32 kg (about 16.5% of the total weight) of the bottom surfaces of the crucibles were prepared and immersing the samples in 2L of hot water at 90°C for 1 hour.

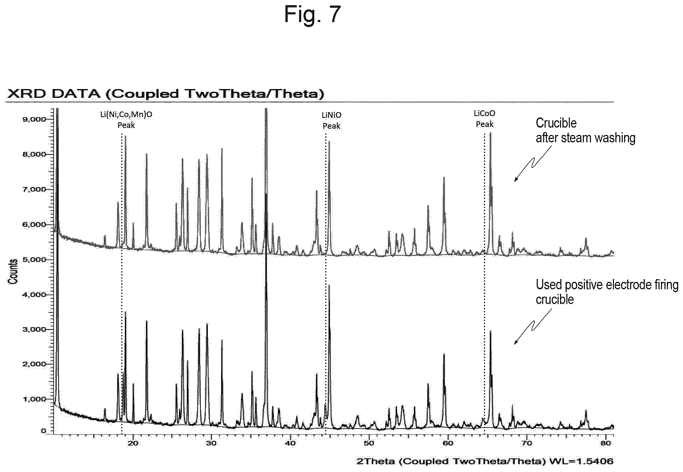

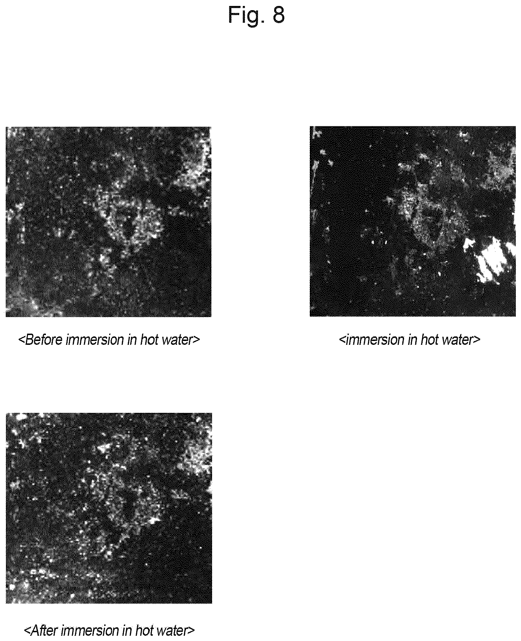

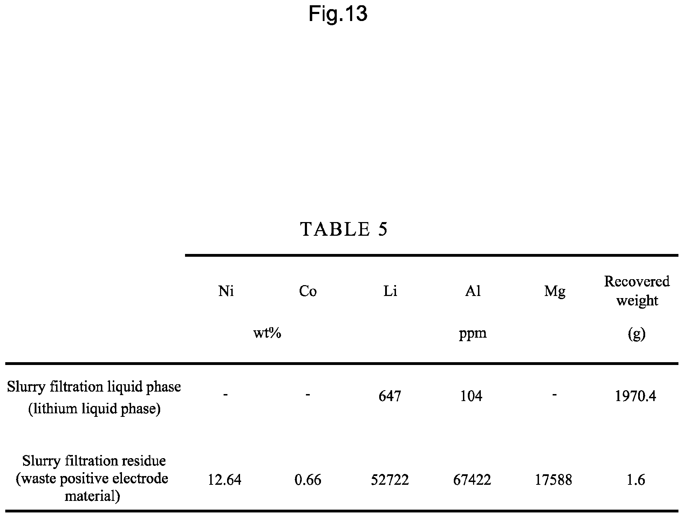

The component analysis data for filtered liquid obtained by filtering the recovered hydrothermal washing liquid under a reduced pressure are shown in Table 5 of FIG.13 below. For reference, FIG. 7 shows XRD (X-ray diffraction) graphs before and after the steam injection step (S20), and FIG. 8 is comparative evaluation images of crucible washing after immersion in hot water.

Compared to the present disclosure, it can be seen that most of the waste positive electrode material is not recovered from filtration residue in slurry by hot water immersion.

### <Embodiment 3: Lithium Concentration Step>

The lithium concentration step (S40) was performed on 500 ml of an aqueous solution containing lithium separated and recovered through the solid-liquid separation step (S30) performed on the slurry recovered through steam washing in the steam injection step (S20).

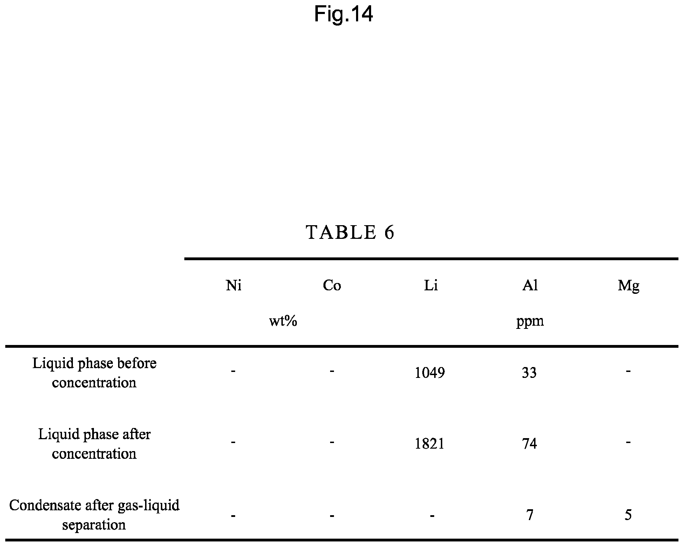

The aqueous solution was evaporated and concentrated to about 41% by volume by being heated to 80°C under a reduced pressure condition of 76 Torr. In this process, 295 ml of lithium liquid was recovered, and 175 ml of condensate (separated liquid) was recovered through gas-liquid separation of the vapor generated during the concentration process, from which it is estimated that about 30 ml of water vaporized and released. The condensate and concentrated lithium liquid phase recovered through the gas-liquid separation were analyzed for main compositions and impurity components by using ICP-OES equipment. The data obtained through the analysis are shown in Table 6 of FIG.14 below.

In the lithium concentration step (S40), the aqueous solution containing lithium was concentrated depending on the evaporation rate. The condensate recovered through gas-liquid separation not to contain lithium can be reused as a steam injection supply liquid phase by being recirculated to the steam injection step (S20) via the steam supply step (S50) . In addition, the concentrated liquid phase is concentrated into a high-concentration lithium liquid phase by circulating through the processes until the target concentration is reached.

### <Example 4: Evaluation of Dissolution of Crucible Discharged via Steam Injection Step>

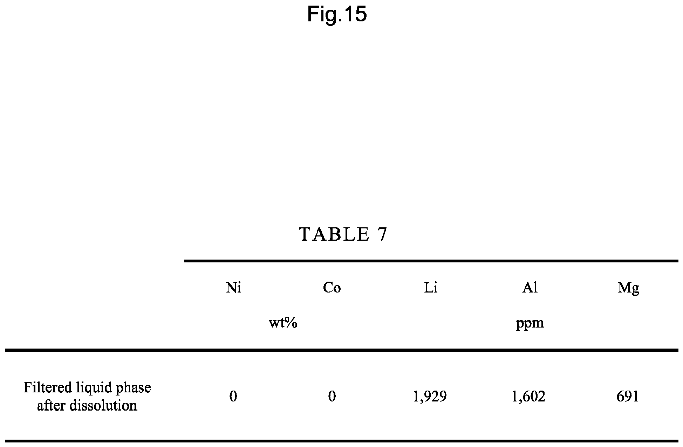

After the steam injection step (S20), in order to confirm the possibility of recovering additional lithium from used crucibles from which most of the waste positive electrode material and lithium were recovered, a standard sample of 0.99 kg was produced, and additional dissolution evaluation was conducted for 2 hours under conditions of 80°C and pH 1.0. Data obtained by analyzing main compositions and impurity components by using ICP-OES equipment are shown in Table 7 of FIG.15 below.

Based on the Al, Mg, and Si compounds, which are the main components of the crucible, the peaks of the main elements (Ni, Co) of a waste positive electrode material were confirmed for used crucibles, and since some of the lithium and most of the waste positive electrode material were recovered through steam washing, the peaks of the crucible components excluding these were confirmed.

Through the dissolution evaluation of the crucibles after the steam injection step (S20), it was confirmed that recovery of additional lithium was possible, but Al was dissolved at a similar rate. Therefore, when recovering lithium by using a solvent in the future, it is expected that the direction for removing impurities should be reviewed.

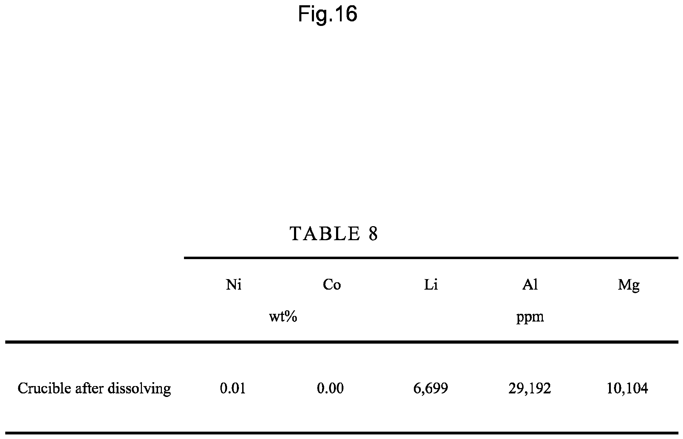

Data obtained by analyzing main compositions and impurity components for dissolved crucibles by using ICP-OES equipment are shown in Table 8 of FIG.16 below. As a result of the analysis, it was confirmed that some Li remains, but since the amount is a very small amount of about 0.6% of all of the crucibles, it is expected that no clear peak will be detected during XRD analysis.

As described above, a system for recovering valuable metals from crucibles used in in the production of a positive electrode active material according to the present disclosure provides a series of automated systems capable of continuously recovering valuable metals including nickel, cobalt, and lithium efficiently while eliminating the use of acid solutions in the prior art.

In particular, the system of the present disclosure injects medium-pressure steam and high-pressure steam to the side surfaces and bottom surfaces of crucibles where lithium, nickel, cobalt, and the like are present to be spread and penetrated into the surfaces and porous structures, thereby achieving an effect of maximizing the recovery efficiencies of valuable material without fully crushing and pulverizing crucibles as in the prior art.

In other words, compared to the prior art for the same period of time, when using the high-pressure steam of the present disclosure as a recovery method using hot water, it was possible to recover most of valuable metals in a waste positive electrode material in the form of residue, and the recovery efficiency for all the crucibles was also confirmed to be close to 90% for Ni and Co.

In addition, the present disclosure has an effect of significantly improving process and energy efficiency by collecting steam generated in the lithium concentration step and reusing the steam in the steam injection step.
pulverization of lithium recovery process using high-pressure steam can significantly reduce the dust generated during the subsequent powder forming processes such as crushing and pulverization of the crucibles. Therefore, the present disclosure is expected to have great industrial applicability since there are various advantages such as a secondary load reduction effect on environmental facilities.

## Claims

1. A system for recovering a valuable metal from a crucible used to produce a positive electrode active material, the system comprising:
a crucible input unit (100) provided such that used positive electrode firing crucibles containing positive electrode material residue and lithium are placed thereon in a state in which openings of the crucible face downward, and are put into the system;
a steam injection unit (200) defining a chamber and configured to sequentially move the crucibles put into the chamber and to inject high-pressure to inside and outside of the crucibles to separately collect slurry;
a solid-liquid separation unit (300) configured to separate the slurry into solid and liquid, to discharge waste positive electrode material residue, and to separately collect a low-concentration lithium liquid phase;
a lithium concentration unit (400) configured to recover a high-concentration lithium liquid phase concentrated to a target concentration through heating reaction of the low-concentration lithium liquid phase and to separately discharge steam; and
a steam supply unit (500) configured to collect and reheat the discharged steam to a target temperature, and to supply high-pressure steam to the steam injection unit (200).

2. The system of Claim 1, wherein the steam injection unit (200) comprises:
a crucible movement module (210) configured to operate in one direction inside the chamber and having spacing guides (211) arranged to seat outer peripheries of the openings of the crucibles at regular intervals on a top of the crucible movement module;
a first steam injection module (220) having nozzles arranged at regular intervals vertically below the crucible movement module (210), the first steam injection module being configured to supply the high-pressure steam from the steam supply unit (500) into the crucibles; and
a slurry collection module (230) defining a slope (231) in one direction below the first steam injection module (220), the slurry collection module 230 configured to collect slurry falling from the crucibles into a slurry stirring tank (232) .

3. The system of Claim 2, wherein the first steam injection module (220) comprises:
one nozzle provided at a position corresponding to a deep portion of each crucible and configured to inject the high-pressure steam over an entire radial area, or multiple nozzles arranged at regular intervals to be provided at multiple positions corresponding to a shape of each crucible and configured to inject the high-pressure steam at respective portions, and
wherein the single nozzle or the multiple nozzles are installed such that an injection direction of the high-pressure steam can be fixed or rotated.

4. The system of Claim 2, wherein the high-pressure steam injected into the crucibles by the first steam injection module (220) has a temperature of 100 to 230°C.

5. The system of Claim 1, wherein the steam injection unit 200 comprises primary shielding modules (241, 242) and secondary shielding modules (251, 252) are dually installed on inlet and outlet sides of the chamber, respectively, to shield the inside of the chamber when putting and discharging the crucibles into and from the chamber.

6. The system of Claim 1, wherein the steam injection unit (200) comprises a second steam injection module having nozzles arranged at regular intervals above the crucible movement module (210) and configured to inject the high-pressure steam supplied from the steam supply unit (500) to the outside of the crucibles and the crucible movement module (210) .

7. The system of Claim 1, wherein the solid-liquid separation unit (300) comprises:
a filtration module (310) configured to receive slurry collected from the steam injection unit 200 and to filter the slurry with a filter press;
a residue discharge module (320) configured to separately discharge filtered waste positive electrode material residue to be used for recovery of the valuable metals; and
a liquid collection module (330) configured to collect a filtered low-concentration lithium liquid phase in the filtered liquid tank (331) and to supply the filtered low-concentration lithium liquid phase to the lithium concentration unit (400) or to circulate the filtered low-concentration lithium liquid phase to the steam injection unit (200).

8. The system of Claim 1, wherein the lithium concentration unit (400) comprises:
a liquid phase supply module (410) configured to supply the low-concentration lithium liquid phase collected in the solid-liquid separation unit (300) to an upper portion of the concentration reaction module (420);
a concentration reaction module (420) configured to concentrate the supplied low-concentration lithium liquid phase into a high-concentration lithium liquid phase through evacuation and heating;
a steam discharge module (430) configured to screen steam generated from the concentration reaction module (420) and to discharge the steam to the steam supply unit (500); and
a concentrated lithium recovery module (440) configured to recover the high-concentration lithium liquid concentrated in the concentration reaction module (420).

9. The system of Claim 8, wherein the concentration reaction moule (420) comprises:
a reaction tank (421) provided with an insulation portion (422) jacketed outside and having a stirrer installed therein;
a heat supply unit (423) configured to supply heat to the reaction tank (421) to heat the reaction tank; and
a washing injection unit (424) configured to selectively inject distilled water from an upper portion of the reaction tank (421).

10. The system of Claim 8, wherein the concentration reaction module (420) comprises a recovery concentration measuring unit (425) configured to measure a lithium concentration in the high-concentration lithium liquid phase and to discharge the high-concentration lithium liquid phase to the concentrated lithium recovery module (440) when the lithium concentration reaches 8 to 10% by weight or more.

11. The system of Claim 1, wherein the steam supply unit (500) comprises:
a gas-liquid separation module (510) configured to collect steam generated in the lithium concentration unit (400) and to separate the steam into separated gas and separated liquid;
a steam reheating module (520) connected to the gas-liquid separation module (510) and configured to reheat the separated gas to a target pressure and temperature;
a steam regeneration module (530) configured to receive the separated liquid from a separated liquid tank (531) connected to the gas-liquid separation module (510) and to generate steam at the target pressure and temperature; an
a steam supply module (540) configured to filter the high-pressure steam formed in the steam reheating module (520) and the steam regeneration module (530) and to supply the filtered high-pressure steam to the steam injection unit 200.

12. The system of Claim 11, wherein the steam supply module 540 comprises:
a steam filter (541) installed on a steam flow line connected to the steam reheating module (520) and the steam regeneration module (530);
a first steam line (542) connected to the first steam injection module (220) of the steam injection unit (200) behind the steam filter (541); and
a second steam line (543) connected to the second steam injection module (260) of the steam injection unit (200) behind the steam filter 541.
